# EUROPEAN PATENT APPLICATION

(11) **EP 1 657 493 A1**
(43) Date of publication of application: **17.05.2006**
(21) Application number: 05256476.2
(22) Date of filing: 19.10.2005
(51) Int. Cl.: F24C 15/18

(54) **Electric oven with partition plate**

(30) Priority: 11.11.2004 KR 2004092061
(71) Applicant: Samsung Electronics Co., Ltd., Suwon-si, Gyeonggi-Do (KR)
(72) Inventor: Kim, Jun-beom, c/o Keumho Best Ville 102-1202, Seoul (KR)
(74) Representative: Sherrard-Smith, Hugh

(57) **Abstract**

An electric oven includes a main body (10) formed with a cooking chamber (12) and a door (5) opening/closing the cooking chamber. The electric oven further includes a heater unit (20) provided in the main body and for heating the cooking chamber; a partition plate (15) detachably provided in the cooking chamber and partitioning the cooking chamber into a first cooking chamber (12a) and a second cooking chamber (12b); a mode selecting unit (30) provided to select one of cooking modes for a single type cooking chamber without the partition plate, and for a double type cooking chamber with the partition plate; and a detector (71) which detects whether the partition plate is mounted in the cooking chamber, and a controller (70) which adjusts the mode selecting unit corresponding either to the single type cooking chamber or to the double type cooking chamber.

## Description

The present invention relates to an electric oven and, more particularly, to an electric oven selectively dividing a cooking chamber.

Generally, an electric oven comprises a cooking chamber accommodating food or the like; and an electric heater mounted in the cooking chamber, and generating heat to cook the food accommodated in the cooking chamber.

Such a conventional electric oven comprising the electric heater is disclosed in Korean Patent First Publication No. 2004-0067381. The conventional electric oven comprises an external case forming an external appearance; a cavity formed with a cooking chamber open/closed by a door, and provided inside of the external case; and a plurality of heaters provided in positions corresponding to respective surfaces of the cavity except the door.

However, because the conventional electric oven comprises a single cooking chamber corresponding to the door, the entire cooking chamber needs to be heated to cook just a small quantity of food, thereby taking a longer time and consuming more electricity.

An aim of the present invention is to provide an efficient electric oven reducing time and power consumption for cooking.

Other aims and/or advantages of the present invention will be set forth in part in the description which follows and, in part, will be apparent from the description, or may be learned by practice of the present invention.

An aspect of the invention provides an electric oven with a partitioning part selectively dividing the cooking chamber.

A further aspect of the invention provides a mode selecting unit which a user adjusts without difficulty to select a cooking mode depending on whether the partitioning part is mounted in the cooking chamber.

According to the present invention there is provided an apparatus as set forth in the appended claims. Preferred features of the invention will be apparent from the dependent claims, and the description which follows.

In one aspect of the present invention there is provided an electric oven comprising a main body formed with a cooking chamber and a door opening/closing the cooking chamber, the electric oven further comprising a heater unit provided in the main body and which heats the cooking chamber; a partition plate detachably provided in the cooking chamber and for partitioning the cooking chamber into a first cooking chamber and a second cooking chamber; a mode selecting unit provided to select one of cooking modes for a single type cooking chamber without the partition plate, and for a double type cooking chamber with the partition plate; and a controller which detects whether the partition plate is mounted in the cooking chamber, and adjusts the mode selecting unit corresponding either to the single type cooking chamber or to the double type cooking chamber.

Preferably, the mode selecting unit comprises a first mode selecting unit operative to select the cooking modes either for the single type cooking chamber, or for the first cooking chamber of the double type cooking chamber; and a second mode selecting unit operative to select the cooking modes for the second cooking chamber of the double type cooking chamber.

Preferably, the first mode selecting unit comprises a single type mode displayer for displaying the cooking modes for the single type cooking chamber; a first mode displayer for displaying the cooking modes for the double type cooking chamber; and a first dial assembly operative to select one of the cooking modes displayed on the single type mode displayer and the first mode displayer.

Preferably, the single type mode displayer and the first mode displayer are respectively provided with a lamp selectively controlled by the controller according to the single type cooking chamber or the double type cooking chamber.

Preferably, the first dial assembly comprises a first dial rotatably provided to select one of the cooking modes displayed on the single type mode displayer and the first mode displayer; and a first switch rotatably supporting the first dial, and provided to connect the cooking modes selected by the first dial with respect to the controller.

Preferably, the single type mode displayer and the first mode displayer are provided with a penetrating part through which the first switch penetrates.

Preferably, the second mode selecting unit comprises a second mode displayer for displaying the cooking modes for the double type cooking chamber; and a second dial assembly operative to select one of the cooking modes displayed on the second mode displayer.

Preferably, the electric oven further comprises temperature dials for adjusting a temperature of the cooking chamber, wherein the controller detects whether the partition plate is mounted in the cooking chamber or not, and adjusts the temperature dial corresponding either to the single type cooking chamber or to the double type cooking chamber.

Preferably, the temperature dials comprise a first temperature dial provided for adjusting either the temperature of the single type cooking chamber or the temperature of the first cooking chamber of the double type cooking chamber; and a second temperature dial provided for adjusting the temperature of the second cooking chamber of the double type cooking chamber.

Preferably, the heater unit comprises upper heaters provided at an upper part of the cooking chamber; a lower heater provided at a lower part of the cooking chamber; and convection heaters provided in a rear part of the first cooking chamber and the second cooking chamber, and wherein each of the convection heaters is provided with a ventilating fan.

Preferably, the controller comprises a partition plate detecting sensor mounted in the cooking chamber and for detecting whether the partition plate is mounted in the cooking chamber.

For a better understanding of the invention, and to show how embodiments of the same may be carried into effect, reference will now be made, by way of example, to the accompanying diagrammatic drawings in which:
Figure 1 is a perspective view of an electric oven according to an embodiment of the present invention;
Figure 2 is a schematic view illustrating a heater provided in the electric oven;
Figure 3 is an exploded perspective view of a control panel of the electric oven;
Figure 4 is a control block diagram of the electric oven;
Figure 5 is a plan view of the control panel in the case a partition plate is not mounted in the electric oven; and
Figure 6 is a plan view of the control panel in the case the partition plate is mounted in the electric oven.

Reference will now be made in detail to the illustrative, non-limiting embodiments of the present invention, examples of which are illustrated in the accompanying drawings, wherein like reference numerals refer to like elements throughout.

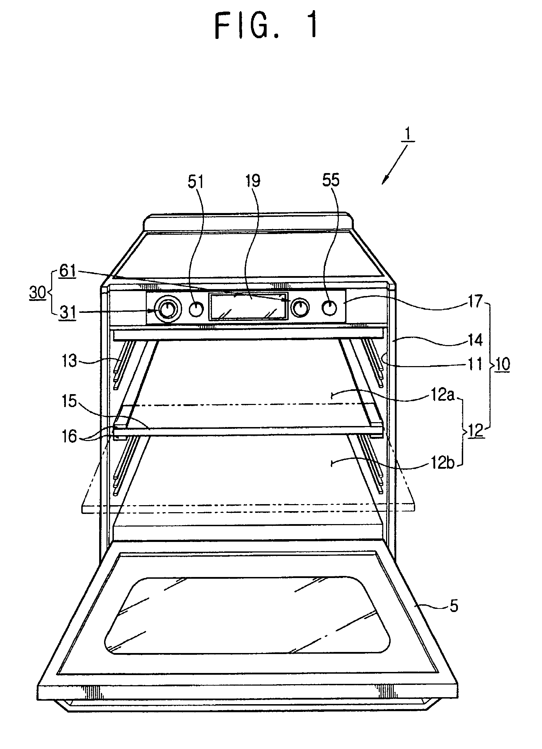

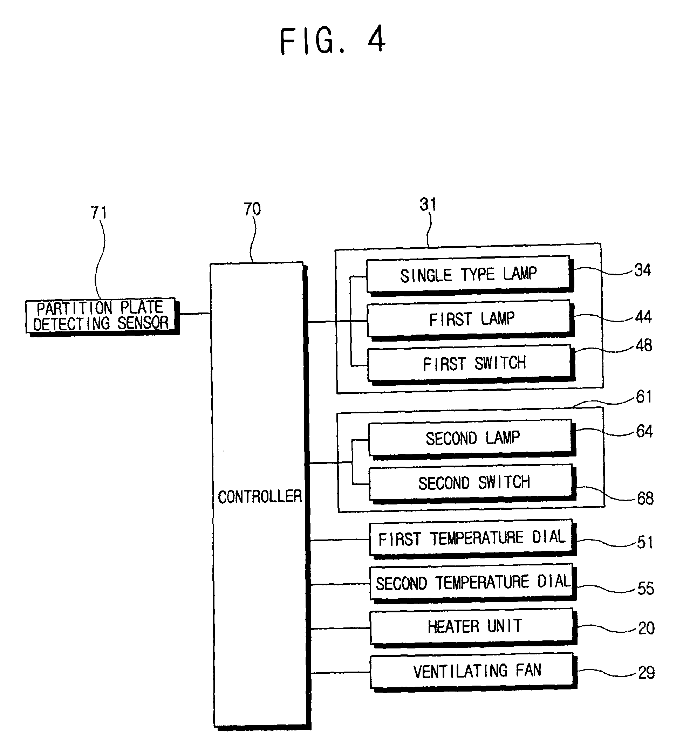

As shown in Figures 1 through 6, an electric oven 1 consistent with the present invention comprises a main body 10 formed with a cooking chamber 12; a door 5 pivotably provided on a front of the main body 10, and opening/closing the cooking chamber 12; a heater unit 20 provided in the main body 10, and heating the cooking chamber 12; a partition plate 15 detachably provided in the cooking chamber 12, and dividing the cooking chamber 12 into a first cooking chamber 12a and a second cooking chamber 12b; a mode selecting unit 30 provided for selecting cooking modes for a single type cooking chamber without the partition plate 15 or for a double type cooking chamber with the partition plate 15; and a controller 70 which detects whether the partition plate 15 is mounted in the cooking chamber 12, and which adjusts the mode selecting unit 30 corresponding either to the single type cooking chamber or to the double type cooking chamber.

The main body 10 comprises an internal casing 11 forming the cooking chamber 12; an external casing 14 forming an external appearance; and a control panel 17 mounted on the external casing 14.

The internal casing 11 forms the cooking chamber 12 together with the door 5. On a wall of the internal casing 11 are formed a partition plate support 16 for supporting the partition plate 15 and a tray support 13 for supporting a tray (not shown) accommodating food, etc. The cooking chamber 12 is divided into upper and lower parts by the partition plate 15. The first cooking chamber 12a is provided at an upper part of the cooking chamber 12, and the second cooking chamber 12b is provided at a lower part of the cooking chamber 12. Alternatively, the first cooking chamber 12a may be provided at a lower part of the cooking chamber 12, and the second cooking chamber 12b may be provided at an upper part of the cooking chamber 12.

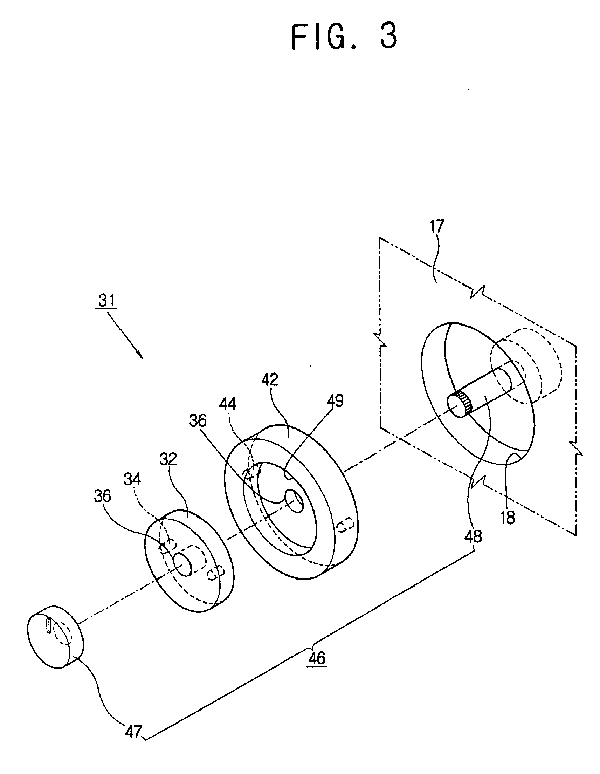

On the control panel 17 are provided the mode selecting unit 30, temperature dials 51 and 55 for adjusting a temperature of the cooking chamber 12 and a display part 19 for displaying cooking time, the temperature of the cooking chamber 12 or the like. Also, a mode selecting unit accommodator 18 (see Figure 3) is provided on the control panel 17 to accommodate the mode selecting unit 30.

The temperature dials 51 and 55 are controlled by the controller 70 corresponding either to the single type cooking chamber or to the double type cooking chamber, depending on whether the partition plate 15 is mounted in the cooking chamber 12 or not. The temperature dials 51 and 55 comprise a first temperature dial 51 for adjusting either a temperature of the single type cooking chamber or a temperature of the first cooking chamber 12a of the double type cooking chamber; and a second temperature dial 55 for adjusting a temperature of the second cooking chamber 12b of the double cooking chamber. The temperature dials 51 and 55 adjust the temperature of the cooking chamber 12 in the range of 50 to 300 degrees Celsius. Alternatively, the temperature dials 51 and 55 may adjust the temperature of the cooking chamber 12 below 50 degrees Celsius or over 300 degrees Celsius.

The first temperature dial 51 adjusts the temperature of the cooking chamber 12 as a whole in the case that the partition plate 15 is detached therefrom. Also, the first temperature dial 51 adjusts the temperature of the first cooking chamber 12a of the double type cooking chamber in the case the partition plate 15 is mounted in the cooking chamber 12.

The second temperature dial 55 adjusts the temperature of the second cooking chamber 12b in the case the partition plate 15 is mounted in the cooking chamber 12.

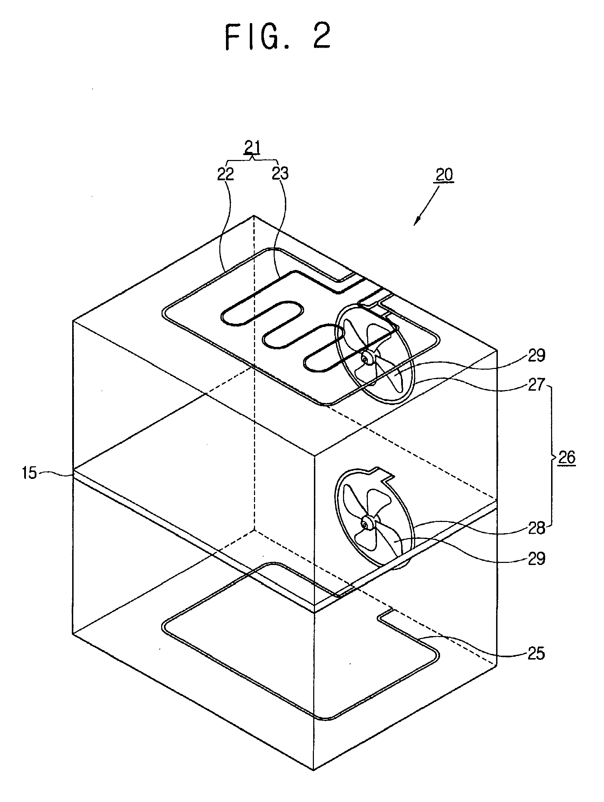

As shown in Figure 2, a heater unit 20 comprises upper heaters 21 provided at an upper part of the cooking chamber 12; a lower heater 25 provided at a lower part thereof; and convection heaters 26 provided in a rear part of the cooking chamber 12.

The upper heaters 21 are provided at an upper part of the first cooking chamber 12a. As an example of the present invention, the upper heaters 21 comprise a first upper heater 22 and a second upper heater 23. Alternatively, the upper heaters 21 may be provided as a single element, three elements or more. As an example of the present invention, the first upper heater 22 is shaped like a rectangle and the second upper heater 23 is serpentine-shaped. The first upper heater 22 and the second upper heater 23 are not limited to the rectangular and the serpentine shapes respectively. Alternatively, the first and the second upper heaters 22 and 23 may be provided in various shapes.

The lower heater 25 is provided at a lower part of the second cooking chamber 12b. As an example of the present invention, the lower heater 25 is provided as a single element. Alternatively, the lower heater 25 may be provided as two elements or more. As an example of the present invention, the lower heater 25 is shaped like a rectangle. The lower heater 25 is not limited to the rectangular shape. Alternatively, the lower heater 25 may be provided in various shapes.

The convection heaters 26 comprise a first convection heater 27 and a second convection heater 28 respectively provided on a back of the first cooking chamber 12a and the second cooking chamber 12b. Alternatively, the convection heaters 26 may be provided either to the first cooking chamber 12a or to the second cooking chamber 12b. Also, three or more convection heaters 26 may be provided in the first cooking chamber 12a and the second cooking chamber 12b. As an example of the present invention, the first convection heater 27 and the second convection heater 28 are shaped like a circle. The first and the second convection heaters 27 and 28 are not limited to the circular shapes. Alternatively, the first and second convection heaters 27 and 28 may be provided as various shapes. A ventilating fan 29 is provided at the first convection heater 27 and the second convection heater 28, respectively.

The ventilating fan 29 promotes heat transmission by circulating air in the cooking chamber 12 by force. That is, the ventilating fan 29 promotes heat transmission of food, etc. accommodated in the cooking chamber 12 through forced convection. The ventilating fan 29 is set up to operate simultaneously with the convection heater 26 as an example of the present invention. Alternatively, the ventilating fan 29 may operate with at least one of the upper heater 21 and the lower heater 25 at the same time, or may operate alone as necessary in the state that the heater unit 20 is turned off.

The mode selecting unit 30 comprises a first mode selecting unit 31 provided for selecting cooking modes either for the cooking chamber 12 as the single type cooking chamber or for the first cooking chamber 12a of the double type cooking chamber; and a second mode selecting unit 61 provided for selecting the cooking modes for the second cooking chamber 12b of the double type cooking chamber.

The first mode selecting unit 31 comprises a single type mode displayer 32 for displaying the cooking modes for the single type cooking chamber; a first mode displayer 42 for displaying the cooking modes for the double type cooking chamber; and a first dial assembly 46 for selecting the cooking modes displayed either on the single type mode displayer 32 or on the first mode displayer 42.

The single type mode displayer 32 comprises a plurality of cooking modes (mode 1 through 4) disposed on a front thereof; a single type lamp 34 disposed therein to display the plurality of cooking modes (mode 1 through 4); and a penetrating part 36 disposed on a center thereof through which a first switch 48 (to be described later) passes. The single type mode displayer 32 is provided as a circular shape as an example of the present invention. The single type mode displayer 32 is not limited to the circular shape. Alternatively, the single type mode displayer 32 may be provided as rectangular or various shapes.

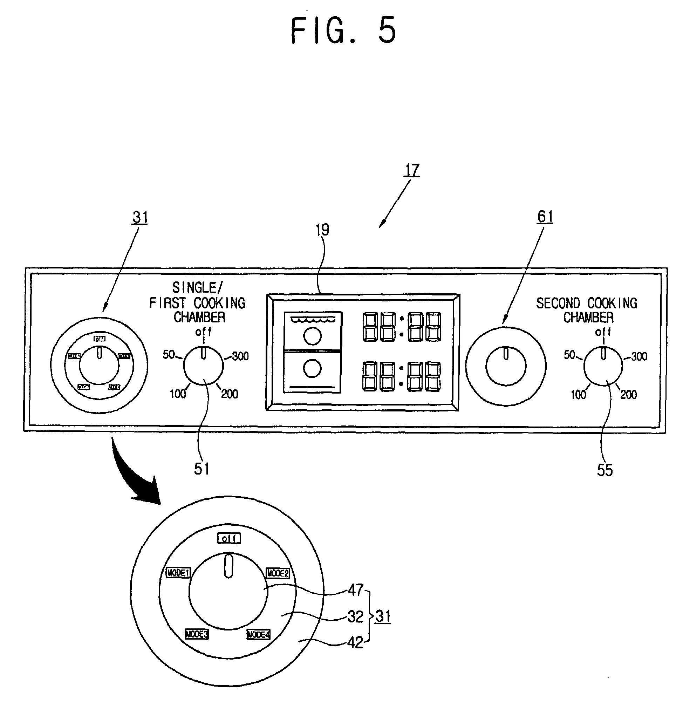

The single type lamp 34 is turned on by the controller 70 to display the plurality of cooking modes (mode 1 through 4) for the single type cooking chamber. (Referring to Figure 5) The single type lamp 34 may be provided as single or plural lamps.

The cooking modes 1 through 4 provided on the single type mode displayer 32 selectively operate the heater unit 20 and the ventilating fan 29 to cook food accommodated in the cooking chamber 12 into various states. As an example of the present invention, the second upper heater 23, the lower heater 25 and the convection heater 26 are turned on to cook food at mode 1. The upper heater 21 is turned on to cook food at mode 2, the lower heater 25 at mode 3, and the convection heater 26 at mode 4. Such cooking modes are set up by various combinations of the heater unit 20 and the ventilating fan 29.

The first mode displayer 42 comprises a plurality of cooking modes (modes 5 through 8) disposed on a front thereof; a first lamp 44 disposed therein to display the plurality of cooking modes (modes 5 through 8); and a penetrating part 36 on a center thereof through which the first switch 48 passes. The first mode displayer 42 is provided as a circular shape as an example of the present invention. The first mode displayer 42 is not limited to the circular shape, and may be alternatively provided as rectangular or various shapes. On a center of the first mode displayer 42 is provided a groove 49 to accommodate the single type mode displayer 32. The first mode displayer 42 is accommodated and coupled to a mode selecting unit accommodator 18 provided on the control panel 17.

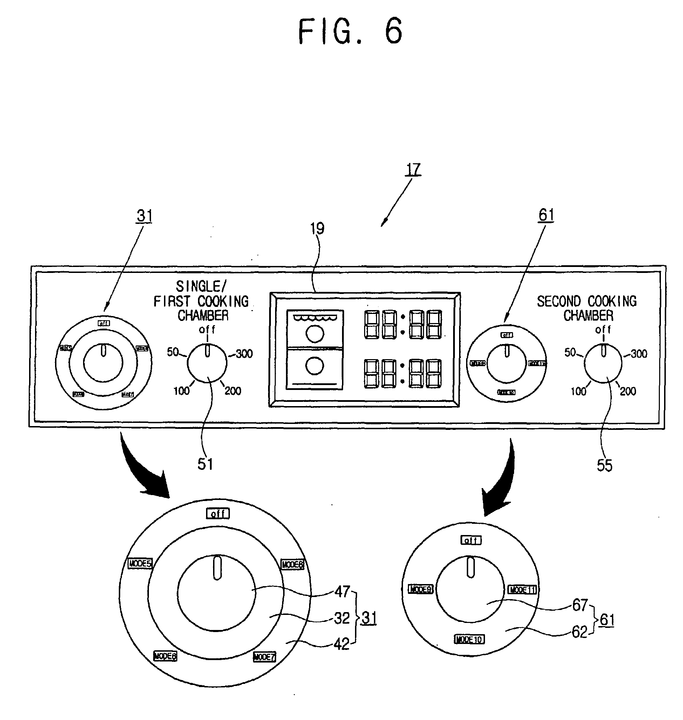

The first lamp 44 is turned on by the controller 70 to display the plurality of cooking modes (modes 5 through 8) for the double type cooking chamber (referring to Figure 6). Alternatively, the first lamp 44 may be provided as single or plural lamps.

The cooking modes (modes 5 through 8) provided on the first mode displayer 42 selectively operate the heater unit 20 and the ventilating fan 29 to cook food accommodated in the first cooking chamber 12a into various states. As an example of the present invention, the first upper heater 22 and the first convection heater 27 are turned on to cook food at mode 5. The first upper heater 22 and the second upper heater 23 are turned on to cook food at mode 6, the first upper heater 22 at mode 7, and the first convection heater 27 at mode 8. Such cooking modes are set up by various combinations of the heater unit 20 and the ventilating fan 29.

The penetrating part 36 accommodates a part of the first switch 48 to make the first switch 48 couple with the first dial 47. Cables (not shown) respectively connected to the single type lamp 34 and the first lamp 44 may pass through the penetrating part 36.

The first dial assembly 46 comprises the first dial 47 rotatably provided to select one of the cooking modes displayed on the single type mode displayer 32 and the first mode displayer 42; and the first switch 48 rotatably supporting the first dial 47, and provided for connecting the cooking modes selected by the first dial 47 with respect to the controller 70.

The first dial 47 is provided on a front of the single type mode displayer 32 and the first mode displayer 42 to be adjusted without difficulty.

The first switch 48 is provided inside of the single type mode displayer 32 and the first mode displayer 42, and coupled with the first dial 47 through the penetrating part 36. The first switch 48 is electrically connected with the controller 70 to transmit the cooking modes selected by the first dial 47 to the controller 70, and controls the heater unit 20 and the ventilating fan 29.

The second mode selecting unit 61 comprises a second mode displayer 62 for displaying the cooking modes for the double type cooking chamber; and second dial assembling bodies 67 and 68 provided to select one of the cooking modes displayed on the second mode displayer 62.

The second mode displayer 62 comprises a plurality of cooking modes (modes 9 through 11) provided on a front thereof; a second lamp 64 provided therein to display the plurality of cooking modes (modes 9 through 11); and a penetrating part (not shown) provided on a center thereof, through which a second switch 68 (to be described later) passes. The detailed description will be dispensed with as the second mode displayer 62 is similar to the single type mode displayer 32 of the first mode selecting unit 31.

The second lamp 64 is turned on by the controller 70 to display the plurality of cooking modes (modes 9 through 11) for the double type cooking chamber (referring to Figure 6). The second lamp 64 may be provided as single or plural lamps.

The cooking modes (modes 9 through 11) provided on the second mode displayer 62 selectively operate the heater unit 20 and the ventilating fan 29 to cook food accommodated in the second cooking chamber 12b into various states. As an example of the present invention, the lower heater 25 and the second convection heater 28 are turned on to cook food at mode 9. The lower heater 25 is turned on to cook food at mode 10, the second convection heater 28 at mode 11. Such cooking modes are set up by various combinations of the heater unit 20 and the ventilating fan 29.

The second dial assembling bodies 67 and 68 comprise a second dial 67 rotatably provided to select one of the cooking modes displayed on the second mode displayer 62; and a second switch 68 rotatably supporting the second dial 67, and provided to connect the cooking modes selected by the second dial 67 with respect to the controller 70.

The detailed description will be dispensed with as the second dial 67 and the second switch 68 are similar to the first dial 47 and the first switch 48.

The controller 70 receives a signal from a partition plate detecting sensor 71 mounted in the cooking chamber 12 and for detecting whether the partition plate 15 is mounted in the cooking chamber 12, and controls the mode selecting unit 30 and the temperature dials 51 and 55 corresponding either to the single type cooking chamber or to the double type cooking chamber. The controller 70 controls the heater unit 20 and the ventilating fan 29 at the cooking modes selected by the first dial 47 for the single type cooking chamber, and adjusts the temperature of the cooking chamber 12 into a temperature selected by the first temperature dial 51. The controller 70 controls the heater unit 20 and the ventilating fan 29 at the cooking modes selected by at least one of the first dial 47 and the second dial 67 for the double type cooking chamber, and adjusts the temperature of at least one of the first cooking chamber 12a and the second cooking chamber 12b into a temperature selected by at least one of the first temperature dial 51 and the second temperature dial 55.

With this configuration, the operation process of the electric oven 1 according to the present invention depending on the presence/absence of the partition plate 15 is as follows.

First, when receiving a signal for the single type cooking chamber from the partition plate detecting sensor 71, the controller 70 turns on the single type lamp 34 of the first mode selecting unit 31 to make the first dial 47 operative by the user to select one of the cooking modes (modes 1 through 4) displayed on the single type mode displayer 32, and controls the heater unit 20 and the ventilating fan 29 to cook food at a mode selected from the cooking modes (modes 1 through 4) by operating the first dial 47. Also, the controller 70 adjusts the temperature of the cooking chamber 12 into a temperature selected by the first temperature dial 51. Conversely, the controller 70 controls the heater unit 20 and the ventilating fan 29 to stop operating according to one of the cooking modes (modes 5 through 8) displayed on the first mode displayer 42 of the first mode selecting unit 31, and according to the cooking modes (modes 9 through 11) displayed on the second mode displayer 62 of the second mode selecting unit 61. The controller 70 turns off the first lamp 44 of the first mode displayer 42 and the second lamp 64 of the second mode displayer 62.

When receiving a signal for the double type cooking chamber from the partition plate detecting sensor 71, the controller 70 turns on the first lamp 44 of the first mode selecting unit 31 to make the first dial 47 operative by the user to select one of the cooking modes (modes 5 through 8) displayed on the first mode displayer 42, and controls the heater unit 20 and the ventilating fan 29 to cook food at a mode selected from the cooking modes (modes 5 through 8) by operating the first dial 47. Also, the controller 70 adjusts the temperature of the first cooking chamber 12a into a temperature selected by operating the first temperature dial 51. The controller 70 turns on the second lamp 64 of the second mode selecting unit 61 to make the second dial 67 operative by the user to select one of the cooking modes (modes 9 through 11) displayed on the second mode displayer 62, and controls the heater unit 20 and the ventilating fan 29 to cook food at a mode selected from the cooking modes (modes 9 through 11) by operating the second dial 67. The controller 70 adjusts the temperature of the second cooking chamber 12b into a temperature selected by the second temperature dial 55. Conversely, the controller controls the heater unit 20 and the ventilating fan 29 to stop operating according to one of the cooking modes (modes 1 through 4) displayed on the single type mode displayer 32 of the first mode selecting unit 31. The controller 70 turns off the single type lamp 34 of the single type mode displayer 32.

Thus, the electric oven according to the present invention comprises the partition plate detachably attached to the cooking chamber to selectively divide the cooking chamber depending on the quantity of food to be cooked, thereby reducing time and power consumption for cooking. Also, the mode selecting unit for selecting the cooking modes is used both for the single type cooking chamber for which the partition plate is detached from the cooking chamber, and for the double type cooking chamber for which the partition plate is mounted in the cooking chamber, thereby simplifying a structure of the electric oven and utilizing the electric oven without difficulty.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An electric oven comprising a main body (10) formed with a cooking chamber (12) and a door (5) opening/closing the cooking chamber (12), the electric oven further comprising:
a heater unit (20) provided in the main body (10) and which heats the cooking chamber (12);
a partition plate (15) detachably provided in the cooking chamber (12) and for partitioning the cooking chamber (12) into a first cooking chamber (12a) and a second cooking chamber (12b);
a mode selecting unit (30) provided to select one of cooking modes for a single type cooking chamber without the partition plate (15), and for a double type cooking chamber with the partition plate (15); and
a controller (70) which detects whether the partition plate (15) is mounted in the cooking chamber (12), and adjusts the mode selecting unit (30) corresponding either to the single type cooking chamber or to the double type cooking chamber.

2. The electric oven according to claim 1, wherein the mode selecting unit (30) comprises a first mode selecting unit (31) operative to select the cooking modes (modes 1-8) either for the single type cooking chamber, or for the first cooking chamber (12a) of the double type cooking chamber; and a second mode selecting unit (61) operative to select the cooking modes (modes 9-11) for the second cooking chamber (12b) of the double type cooking chamber.

3. The electric oven according to claim 2, wherein the first mode selecting unit (31) comprises a single type mode displayer (32) for displaying the cooking modes (modes 1-4) for the single type cooking chamber; a first mode displayer (42) for displaying the cooking modes (modes 5-8) for the double type cooking chamber; and a first dial assembly (46) operative to select one of the cooking modes (modes 1-8) displayed on the single type mode displayer (32) and the first mode displayer (42).

4. The electric oven according to claim 3, wherein the single type mode displayer (32) and the first mode displayer (42) are respectively provided with a lamp (34,44) selectively controlled by the controller (70) according to the single type cooking chamber or the double type cooking chamber.

5. The electric oven according to claim 3 or 4, wherein the first dial assembly (46) comprises a first dial (47) rotatably provided to select one of the cooking modes (modes 1-8) displayed on the single type mode displayer (32) and the first mode displayer (42); and a first switch (48) rotatably supporting the first dial (47), and provided to connect the cooking modes (modes 1-8) selected by the first dial (47) with respect to the controller (70).

6. The electric oven according to any of claims 3-5, wherein the single type mode displayer (32) and the first mode displayer (42) are provided with a penetrating part (36) through which the first switch (48) penetrates.

7. The electric oven according to any of claims 2-6, wherein the second mode selecting unit (61) comprises a second mode displayer (62) for displaying the cooking modes (modes 9-11) for the double type cooking chamber; and a second dial assembly (67,68) operative to select one of the cooking modes (modes 9-11) displayed on the second mode displayer (62).

8. The electric oven according to any preceding claim, further comprising: temperature dials (51,55) for adjusting a temperature of the cooking chamber (12), wherein the controller (70) detects whether the partition plate (15) is mounted in the cooking chamber (12) or not, and adjusts the temperature dial (51,55) corresponding either to the single type cooking chamber or to the double type cooking chamber.

9. The electric oven according to claim 8, wherein the temperature dials (51,55) comprise a first temperature dial (51) provided for adjusting either the temperature of the single type cooking chamber or the temperature of the first cooking chamber (12a) of the double type cooking chamber; and a second temperature dial (55) provided for adjusting the temperature of the second cooking chamber (12b) of the double type cooking chamber.

10. The electric oven according to any preceding claim, wherein the heater unit (20) comprises upper heaters (22,23) provided at an upper part of the cooking chamber (12); a lower heater (25) provided at a lower part of the cooking chamber (12); and convection heaters (26) provided in a rear part of the first cooking chamber (12a) and the second cooking chamber (12b), and wherein each of the convection heaters (26) is provided with a ventilating fan (29).

11. The electric oven according to any preceding claim, wherein the controller (70) comprises a partition plate detecting sensor (71) mounted in the cooking chamber (12) and for detecting whether the partition plate (15) is mounted in the cooking chamber (12).
